(19) Europäisches Patentamt
European Patent Office
Office européen des brevets

(11) **EP 3 336 632 A1**

(12) **EUROPEAN PATENT APPLICATION**

(43) Date of publication:
**20.06.2018 Bulletin 2018/25**

(51) Int Cl.:
**G05B 19/418** (2006.01)  **B23Q 7/14** (2006.01)

(21) Application number: **17197014.8**

(22) Date of filing: **18.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **14.12.2016  JP 2016242296**

(71) Applicant: **Omron Corporation
Kyoto-shi, Kyoto 600-8530 (JP)**

(72) Inventors:
• **SHIMAMURA, Junji
Kyoto-shi, Kyoto 600-8530 (JP)**
• **KATAYAMA, Fumimasa
Kyoto-shi, Kyoto 600-8530 (JP)**

(74) Representative: **Horn Kleimann Waitzhofer
Patentanwälte PartG mbB
Ganghoferstrasse 29a
80339 München (DE)**

(54) **PRODUCTION SYSTEM, CONTROLLER, AND CONTROL METHOD**

(57)    To improve the productivity of the entire production line, a production system includes a manufacturing apparatus, a post-processing apparatus, conveyors for transporting workpieces manufactured by the manufacturing apparatus to the post-processing apparatus, an image sensor arranged above a conveyor connected to the manufacturing apparatus to recognize workpieces traveling on the conveyor and measure the workpiece density on the conveyor, a robot that picks each workpiece on the conveyor connected to the manufacturing apparatus, and a controller. The controller performs a first task for identifying each workpiece position on the conveyor using a recognition result from the image sensor and causing the robot to pick a target workpiece, a second task for processing in the manufacturing apparatus, a third task for processing in the post-processing apparatus, and a fourth task for adjusting a processing capability of the manufacturing apparatus and/or the post-processing apparatus using the workpiece density measured by the image sensor.

FIG. 8

**Description**

FIELD

The present invention relates to a production system for manufacturing workpieces, and a controller and a control method for the production system.

BACKGROUND

In factory automation (FA), conveyor tracking systems including conveyors and robots are commonly used. In a typical conveyor tracking system, objects being transported on a conveyor are recognized with an image sensor, the positions of target objects are sequentially detected based on the recognition results, and the target objects are picked with robots as appropriate and transported to the following process.

Such a conveyor tracking system is arranged between, for example, a process for manufacturing objects and a process for packaging the objects. The transportation volume of objects by a conveyor per unit time is determined by the transportation speed of the conveyor and the number of objects on the conveyor.

When the transportation volume of objects per unit time exceeds its design value, the robot can fail to pick objects. Conversely, when the transportation volume of objects per unit time is largely below the design value, the robot picks fewer objects per unit time to lower the productivity of the entire system.

In response to this issue, Japanese Unexamined Patent Application Publication No. 11-090871 (Patent Literature 1) describes one structure that controls, when more workpieces than the initial setting value are transported per unit time and the robot fails to pick some workpieces, the conveyor speed to reduce the number of such workpieces that the robot can fail to pick, and controls, when fewer workpieces than the initial setting value are transported per unit time and the robot has a wait time, the conveyor speed to shorten the wait time.

Japanese Unexamined Patent Application Publication No. 2010-280010 (Patent Literature 2) describes an object transportation robot system that efficiently places objects into containers transported on a transportation unit such as a conveyor using robots. In this object transportation robot system, a plurality of robot mechanisms are arranged in the transportation direction of the conveyor, and container cell information is shared between each robot mechanism and its immediately upstream and downstream robot mechanism units.

CITATION LIST

PATENT LITERATURE

Patent Literature 1: Japanese Unexamined Patent Application Publication No. 11-090871
Patent Literature 2: Japanese Unexamined Patent Application Publication No. 2010-280010

SUMMARY

TECHNICAL PROBLEM

Although Patent Literature 1 and Patent Literature 2 are directed to the control over the conveyors and the robots, simply controlling the conveyors and the robots may not improve the productivity of the entire production line, because the processes either preceding or following the process using the conveyors commonly use apparatuses installed at actual production sites.

A structure intended to improve the productivity of the entire production line is needed, in addition to the conveyor tracking system including conveyors and robots.

SOLUTION TO PROBLEM

A production system according to one aspect of the present invention includes a manufacturing apparatus that manufactures workpieces, a post-processing apparatus that performs post-processing for the workpieces, a plurality of conveyors that transport the workpieces manufactured by the manufacturing apparatus to the post-processing apparatus, an image sensor arranged above one of the plurality of conveyors connected to the manufacturing apparatus to recognize workpieces traveling on the conveyor and measure a density of the workpieces on the conveyor, a robot that picks each workpiece on the conveyor connected to the manufacturing apparatus, and a controller. The controller performs a first task for identifying a position of each workpiece on the conveyor based on a recognition result obtained by the image sensor and causing the robot to pick a target workpiece, a second task for performing processing in the manufacturing apparatus, a third task for performing processing in the post-processing apparatus, and a fourth task for adjusting a processing capability of at least one of the manufacturing apparatus and the post-processing apparatus based on the density of the workpieces measured by the image sensor.

In some embodiments, the fourth task includes determining whether the transportation capability to be used for the workpieces on the conveyor approaches a maximum transportation capability of the robot based on the density of the workpieces measured by the image sensor and a transportation speed of the conveyor that is associated with the image sensor, and lowering a manufacturing capability of the manufacturing apparatus when the transportation capability to be used for the workpieces on the conveyor approaches the maximum transportation capability of the robot.

In some embodiments, the fourth task includes lowering the processing capability of the post-processing apparatus when the transportation capability to be used for the workpieces on the conveyor approaches the maximum transportation capability of the robot.

In some embodiments, the first task and the fourth task are executed repeatedly in shorter execution cycles than the second task and the third task.

In some embodiments, the controller includes a processor including a plurality of cores. The first task and the fourth task are executed by one of the plurality of cores, and the second task and the third task are executed by another one of the plurality of cores different from the core for executing the first task.

In some embodiments, the first task and the fourth task are executed by a first core included in the plurality of cores, and the second task and the third task are sequentially executed by a second core included in the plurality of cores in the same execution cycle.

A controller according to another aspect of the present invention includes a communication interface that allows data communication among a manufacturing apparatus for manufacturing workpieces, a post-processing apparatus for performing post-processing for the workpieces, an image sensor arranged above a conveyor connected to the manufacturing apparatus to recognize workpieces traveling on the conveyor and measure a density of the workpieces on the conveyor, and a robot for picking each workpiece on the conveyor connected to the manufacturing apparatus, and a processor. The processor performs a first task for identifying a position of each workpiece on the conveyor based on a recognition result obtained by the image sensor and causing the robot to pick a target workpiece, a second task for performing processing in the manufacturing apparatus, a third task for performing processing in the post-processing apparatus, and a fourth task for adjusting a processing capability of at least one of the manufacturing apparatus and the post-processing apparatus based on the density of the workpieces measured by the image sensor.

A control method according to another aspect of the present invention is used in a production system including a manufacturing apparatus for manufacturing workpieces, a post-processing apparatus for performing post-processing for the workpieces, a plurality of conveyors for transporting the workpieces manufactured by the manufacturing apparatus to the post-processing apparatus, and a tracking system for recognizing workpieces traveling on one of the conveyors connected to the manufacturing apparatus, and picking each workpiece on the conveyor and placing the picked workpiece at a predetermined position based on a recognition result for the workpieces. The control method includes measuring a density of the workpieces on the conveyor, determining whether the transportation capability to be used for the workpieces on the conveyor approaches a maximum transportation capability of the tracking system based on the density of the workpieces and a transportation speed of the conveyer, and lowering a transportation speed of the tracking system and lowering a temperature at which the manufacturing apparatus heats the starting material when the transportation capability to be used for the workpieces on the conveyor approaches the maximum transportation capability of the tracking system.

ADVANTAGEOUS EFFECTS

The structure according to the aspects of the present invention is intended to improve the productivity of the entire production line, in addition to the conveyor tracking system.

BRIEF DESCRIPTION OF THE DRAWINGS

Fig. 1 is a schematic diagram showing the appearance of a production system according to the present embodiment.
Fig. 2 is a schematic diagram showing the control configuration of the production system according to the present embodiment.
Fig. 3 is a schematic diagram showing the device configuration of a controller according to the present embodiment.
Fig. 4 is a schematic diagram describing the processing capability of the production system according to the present embodiment.
Fig. 5 is a schematic diagram describing the capability adjustment in the production system according to the present embodiment.
Fig. 6 is a diagram describing the limits on the transportation capability and the processing capability in the production system according to the present embodiment.
Fig. 7 is a diagram showing an example of a user interface screen showing the processing for measuring a workpiece density in the production system according to the present embodiment.
Fig. 8 is a schematic diagram describing program execution in the controller for the production system according to the present embodiment.
Fig. 9 is a flowchart showing one example procedure performed in the controller according to the present embodiment.
Fig. 10 is a diagram showing an example function for controlling a robot that can be used by a user program executed in the controller according to the present embodiment.

DETAILED DESCRIPTION

Embodiments of the present invention will now be described with reference to the drawings. The same or corresponding components in the figures are given the same reference numerals, and will not be described repeatedly.

A. Configuration of Production System

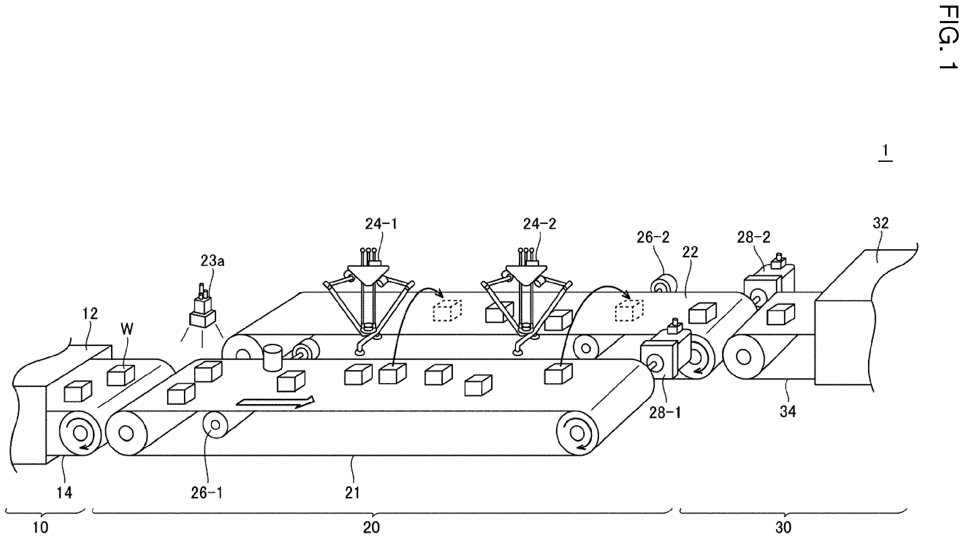

A production system according to the present embodiment will now be described. Fig. 1 is a schematic diagram showing the appearance of a production system 1 according to the present embodiment. As shown in Fig. 1, the production system 1 includes a manufacturing process 10 for manufacturing a product or a half-finished product (hereafter also referred to as a workpiece W), a transportation process 20 for transporting the workpiece W to the following process and classifying and positioning the workpiece W, and a post-process 30 for performing post-processing for the workpiece W (for example, packaging, printing, and packing).

The system includes, in the manufacturing process 10, a manufacturing apparatus 12 for manufacturing a workpiece W and a conveyor 14 as a part of the manufacturing apparatus 12.

The system includes, in the transportation process 20, conveyors 21 and 22, which provide two transportation paths, and robots 24-1 and 24-2 (hereafter may be collectively referred to as robots 24), which provide a mechanism for transferring the workpiece W between the conveyors 21 and 22. Each of the robots 24-1 and 24-2 picks a workpiece W on one conveyor connected to the manufacturing apparatus 12, and places the picked workpiece W onto the other conveyor connected to a packaging apparatus 32. More specifically, when detecting a target workpiece W being transported on the conveyor 21, each of the robots 24-1 and 24-2 tracks the position of the workpiece W, picks the workpiece W at an appropriate timing, and places the workpiece W at a predetermined position on the other conveyor 22.

The system includes, in the post-process 30, a post-processing apparatus for performing post-processing for the workpiece W. One example of the post-processing apparatus is the packaging apparatus 32 in the present embodiment. The packaging apparatus 32 places incoming workpieces W into individual packages by, for example, covering each workpiece with a packaging material and then heating the material. The packaging apparatus 32 includes a conveyor 34.

A conveyor tracking system arranged in the transportation process 20 includes a plurality of conveyors for transporting workpieces W manufactured by the manufacturing apparatus 12 to the packaging apparatus 32, which is one example of the post-processing apparatus. The plurality of conveyors may include a conveyor 14 in the manufacturing process 10 and a conveyor 34 in the post-process 30, in addition to the conveyors 21 and 22.

A camera 23a included in an image sensor (described later) is arranged above the conveyor 21 in the transportation process 20. The camera 23a captures an image of each workpiece W being transported on the conveyor 21. The image sensor may be installed at any position above at least one of the plurality of conveyors. The image sensor detects each workpiece passing the position at which the image sensor is installed.

The conveyor 21 is driven and rotated by a motor 28-1. A touch roller is placed in contact with the conveyor 21, and is mechanically connected to an encoder 26-1, which detects the transportation speed or the travel amount of the conveyor 21. The detected transportation speed or travel amount of the conveyor 21 is used in tracking the position of each workpiece W on the conveyor 21.

In the same manner, the conveyor 22 in the transportation process 20 is driven and rotated by a motor 28-2. A touch roller is placed in contact with the conveyor 22, and is mechanically connected to an encoder 26-2, which detects the transportation speed or the travel amount of the conveyor 22. The detected transportation speed or travel amount of the conveyor 22 is used in tracking the position of each workpiece W on the conveyor 22.

As shown in Fig. 1, the conveyor tracking system according to the present embodiment includes one or more conveyors, one or more robots, and an image sensor.

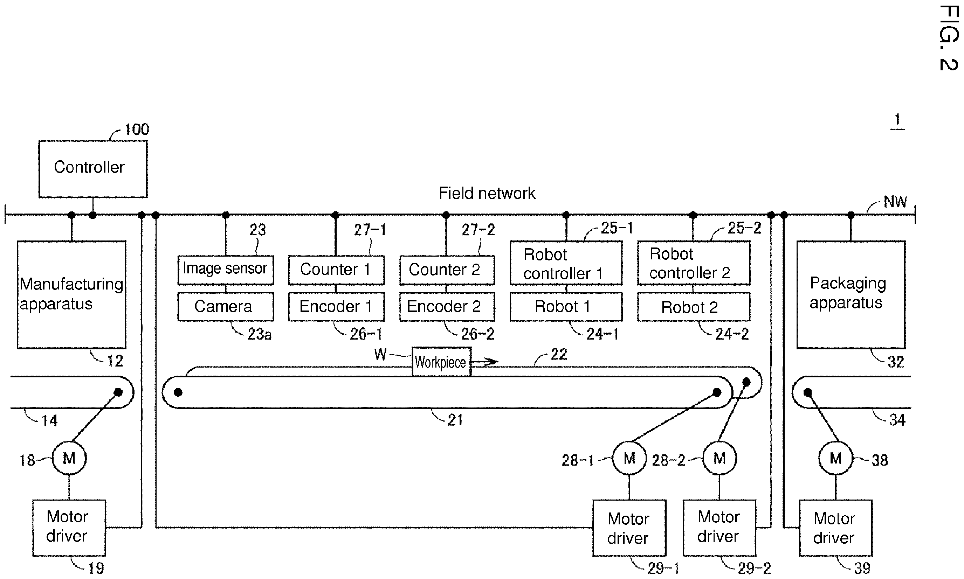

Fig. 2 is a schematic diagram showing the control configuration of the production system 1 according to the present embodiment. Referring now to Fig. 2, the entire production system 1 is controlled by a controller 100. The controller 100 is connected to each component of the production system 1 with a field network NW. More specifically, the field network NW connects the manufacturing apparatus 12, motor drivers 19, 29-1, 29-2, and 39, an image sensor 23, counters 27-1 and 27-2, robot controllers 25-1 and 25-2 (hereafter may be collectively referred to as robot controllers 25), and the packaging apparatus 32.

The manufacturing apparatus 12 activates various actuators for manufacturing a workpiece W in response to a command from the controller 100, and reports information obtained from each sensor to the controller 100.

The motor driver 19 is electrically connected to the motor 18, which drives and rotates the conveyor 14. In response to a command from the controller 100, the motor driver 19 controls the rotation speed and other conditions of the motor 18, and reports the current rotation speed and other conditions of the motor 18 to the controller 100.

The image sensor 23 performs image processing, such as pattern matching, for image data obtained by the camera 23a capturing an image of a workpiece W. The image sensor 23 returns the result of the image processing to the controller 100. The image sensor 23 also stops or starts the image processing in response to a command from the controller 100.

The counter 27-1 counts pulses generated from the encoder 26-1, and transmits the count to the controller 100. In the same manner, the counter 27-2 counts pulses generated from the encoder 26-2, and transmits the count to the controller 100.

The robot controller 25-1 includes, for example, a driver circuit for driving motors included in the robot 24-1. In response to a command from the controller 100, the robot controller 25-1 performs positioning control, speed control, and a pickup operation of the robot 24-1. The robot controller 25-1 reports the current position, the current speed, and the state of the robot 24-1 to the controller 100.

In the same manner, the robot controller 25-2 includes, for example, a driver circuit for driving motors included in the robot 24-2. In response to a command from the controller 100, the robot controller 25-2 performs positioning control, speed control, and a pickup operation of the robot 24-2. The robot controller 25-2 reports the current position, the current speed, and the state of the robot 24-2 to the controller 100.

The motor driver 29-1 is electrically connected to the motor 28-1, which drives and rotates the conveyor 21. In response to a command from the controller 100, the motor driver 29-1 controls the rotation speed and other conditions of the motor 28-1, and reports the current rotation speed and other conditions of the motor 28-1 to the controller 100. In the same manner, the motor driver 29-2 is electrically connected to the motor 28-2, which drives and rotates the conveyor 22. In response to a command from the controller 100, the motor driver 29-2 controls the rotation speed and other conditions of the motor 28-2, and reports the current rotation speed and other conditions of the motor 28-2 to the controller 100.

The packaging apparatus 32 activates various actuators for packaging a workpiece W in response to a command from the controller 100, and reports information obtained by each sensor to the controller 100.

The motor driver 39 is electrically connected to the motor 38, which drives and rotates the conveyor 34. In response to a command from the controller 100, the motor driver 39 controls the rotation speed and other conditions of the motor 38, and reports the current rotation speed and other conditions of the motor 38 to the controller 100.

B. Configuration of Controller

The configuration of the controller 100 according to the present embodiment will now be described. Although the controller 100 may include any computer or any hardware logic, the controller 100 in the present embodiment includes a programmable controller (PLC), which is one typical example of industrial computers.

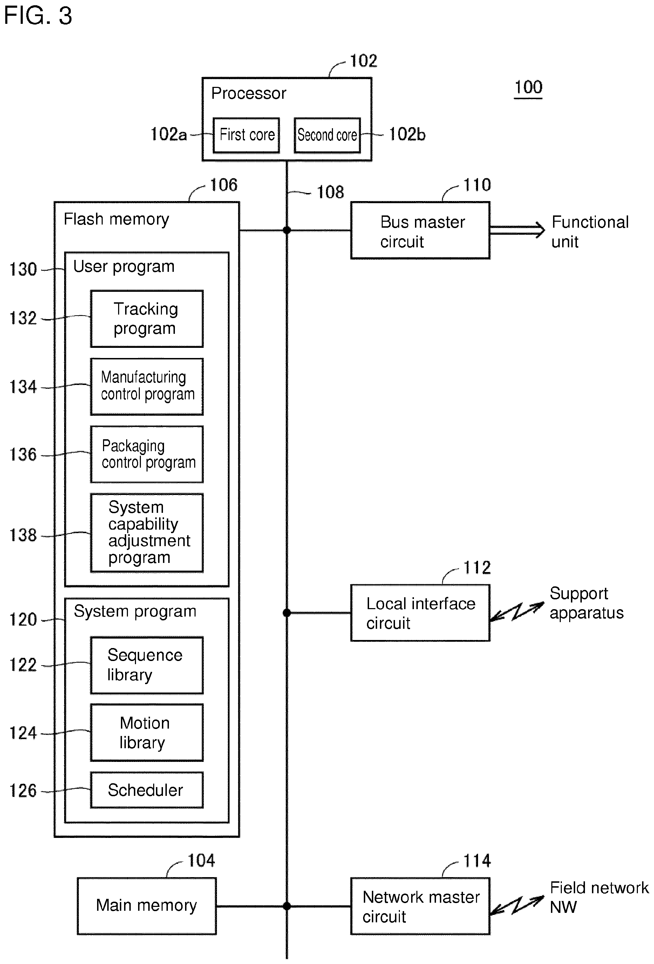

Fig. 3 is a schematic diagram showing the device configuration of the controller 100 according to the present embodiment. As shown in Fig. 3, the controller 100 includes, as its main components, a processor 102, a main memory 104, a secondary memory device 106, a bus master circuit 110, a local interface circuit 112, and a network master circuit 114. The processor 102 is connected to the other components with a bus 108.

The processor 102 in the controller 100 executes system programs 120 and user programs 130 to implement processing including the control method according to the present embodiment.

The processor 102 is an operation unit that sequentially executes instructions written in each program. The processor 102 typically includes a central processing unit (CPU) and a graphical processing unit (GPU). The processor 102 may be a multiple-core processor including a plurality of cores, or may have a multiple-processor structure including a plurality of processors, or may include both multiple cores and multiple processors. The processor 102 described below is a multiple-core processor including a plurality of cores. In this example, the processor 102 includes a first core 102a and a second core 102b.

The main memory 104 is a memory device that offers a working space to be used by the processor 102 to execute a program. The main memory 104 is a volatile memory, such as a dynamic random access memory (DRAM) or a static random access memory (SRAM).

The secondary memory device 106 stores various programs and various configurations that are executed by the processor 102. The secondary memory device 106 is a nonvolatile memory, such as a hard disk drive (HDD) or a solid state drive (SSD). More specifically, the secondary memory device 106 stores the system programs 120 and the user programs 130.

The system programs 120, which are programs equivalent to an operating system, provide the basic system functions implemented by the controller 100 or provide an environment for executing the user programs 130. Examples of the system programs 120 include a sequence library 122, a motion library 124, and a scheduler 126. The sequence library 122 includes codes for executing sequence instructions included in a user program 130. The motion library 124 includes codes for executing motion instructions included in the user program 130. The scheduler 126 controls execution cycles and execution timings of each program (task) included in the user program 130.

The user programs 130 are control programs created in accordance with a control target of the controller 100. For the production system 1 shown in Figs. 1 and 2, the user program 130 includes a tracking program 132, a manufacturing control program 134, a packaging control program 136, and a system capability adjustment program 138. The processing defined in the user programs 130 will be described in detail later.

The bus master circuit 110 controls data transmission on the internal bus for transmitting and receiving data to and from the functional units. The functional units provide various functions for allowing the controller 100 to perform predetermined control of a control target. The functional units are typically capable of collecting field information from machines and equipment to be controlled (data collection function) and/or outputting command signals to machines and equipment to be controlled (data output function).

The local interface circuit 112 is an interface for transmitting and receiving data to and from a support apparatus and other external apparatuses. The local interface circuit 112 conforms to a transmission standard such as the universal serial bus (USB) standard.

The network master circuit 114 controls data transmission on a field network for transmitting and receiving data to and from the functional units and other controllers that are located away from the controller 100. Examples of the field network include a fixed-cycle network, such as EtherCAT (registered trademark), EtherNet/IP (registered trademark), DeviceNet (registered trademark), or CompoNet (registered trademark).

In the production system 1 according to the present embodiment, the network master circuit 114 functions as a communication interface that allows data communication among the manufacturing apparatus 12, the packaging apparatus 32, the image sensor 23, and the robot controllers 25 (robots 24).

C. Control Overview

The overview of the control performed by the production system 1 according to the present embodiment will now be described. As shown in Fig. 1, the production system 1 according to the present embodiment includes the transportation process 20 in which the conveyor tracking system including the conveyors and the robots is arranged, the manufacturing apparatus 12 preceding the transportation process 20, and the packaging apparatus 32 following the transportation process 20. Workpieces W sequentially manufactured by the manufacturing apparatus 12 are sequentially transported by the conveyors until they are packaged by the packaging apparatus 32. The manufacturing apparatus 12, the conveyor tracking system, and the packaging apparatus 32 are thus to be controlled in cooperation with or in synchronization with one another.

In the production system 1 according to the present embodiment, the three structures (the manufacturing apparatus 12, the conveyor tracking system, and the packaging apparatus 32) are controlled by the single controller 100. The single controller 100 controlling these structures can easily determine the states of these structures relative to one another, and thus can optimize their operating states as appropriate to increase the production efficiency.

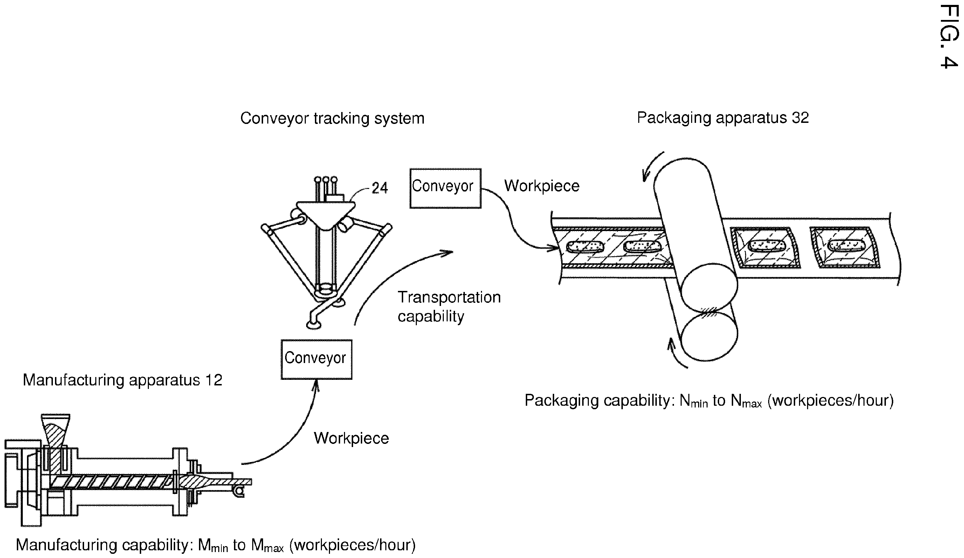

Fig. 4 is a schematic diagram describing the processing capability of the production system 1 according to the present embodiment. As shown in Fig. 4, for example, the manufacturing apparatus 12 can manufacture workpieces W continuously. This manufacturing capability is adjustable between $M_{min}$ and $M_{max}$ (workpieces/hour) by adjusting, for example, the operating speed of each unit. The packaging apparatus 32 is capable of wrapping workpieces W with a packaging material and then sequentially transferring the workpieces W to the following process. This packaging capability is adjustable

between $N_{min}$ and $N_{max}$ (workpieces/hour) by, for example, adjusting the transportation speed of the conveyor and the rotating speed of the cutter.

In this production system including the multiple continuous processes, the production output is limited by the difference in the processing capability between the different processes. To reduce such limitations on the production output, approaches using various tools are known to maximize the production output. One such approach is the theory of constraints (TOC).

One example of the limitations on the production output is the phenomenon described below.

When, for example, the manufacturing apparatus has a high manufacturing capability to manufacture more workpieces per unit time, each robot installed in the transportation process 20 following this manufacturing apparatus may fail to pick workpieces. To prevent this, the number of robots is determined based on the maximum capability of the manufacturing apparatus for manufacturing workpieces (the maximum production output per unit time). As a result, a large number of robots may be installed, relative to the average production output of the manufacturing apparatus.

For workpieces transported by the transportation process 20 to be packaged by a packaging apparatus, the packaging apparatus has a limited packaging capability. For more workpieces transported from the process preceding the packaging apparatus, a buffering mechanism is to be prepared.

In the production system 1 according to the present embodiment, the controller 100 examines the capability difference between the multiple processes, and adjusts the processing capability of each process based on the process having the lowest processing capability that can cause the limitations (this process is considered to be the "bottleneck" in the entire system). The transportation capability of the transportation process 20 (robots 24-1 and 24-2) can be adjusted to adjust the production outputs of the preceding and following processes.

In one example described below, the workpiece picking capability of the robot in the transportation process 20 among the three processes shown in Fig. 4 is considered to be the bottleneck in the entire system. The technical idea of the present invention described below is not limited to this example, and is applicable as appropriate to any process that can be the bottleneck.

In the production system 1 shown in Fig. 4, the manufacturing apparatus 12 is a mechanism for continuously manufacturing workpieces, and the packaging apparatus 32 is a mechanism for continuously packaging workpieces. Modifying the main parts of the manufacturing apparatus 12 and the packaging apparatus 32 may improve their processing capabilities relatively easily. In contrast, the transportation process 20 allows the workpieces to be recognized, and allows the robot to transport each recognized workpiece as appropriate. This process cannot involve continuous processing for the workpieces. Thus, the transportation process 20 (robots 24-1 and 24-2) is more likely to be the bottleneck in the production system 1.

Adding robots to the transportation process 20 can increase the cost and may thus be difficult. Also, the limited space in the transportation process 20 can accommodate a limited number of robots.

As described above, the transportation capability of the transportation process 20 (robots 24-1 and 24-2) can be the bottleneck in the production system 1, and limits the number of workpieces transported to below this transportation capability. Thus, the production system 1 according to the present embodiment adjusts the processing capability of the preceding and/or following process of the transportation process 20 in a manner that does not exceed the transportation capability of the transportation process 20.

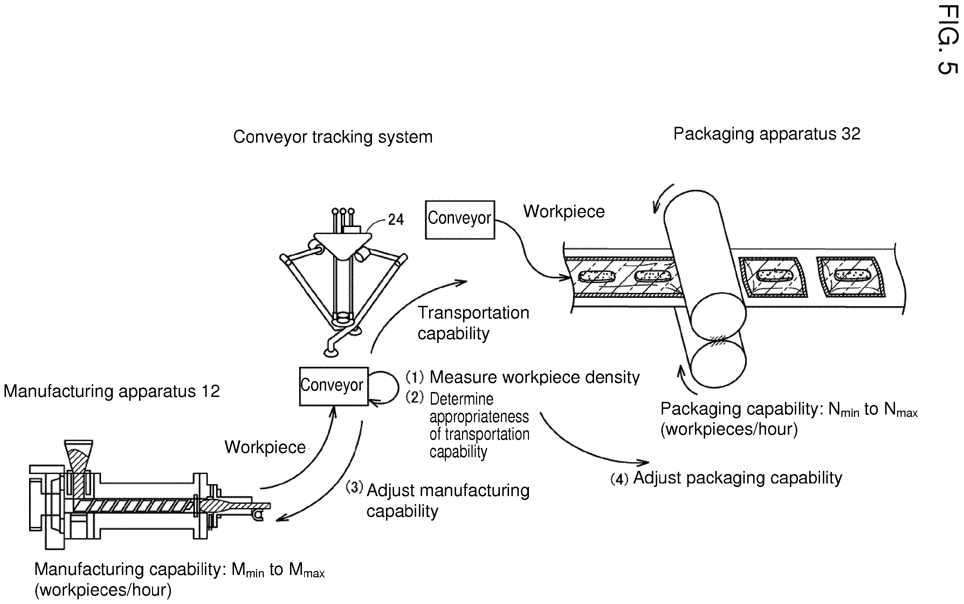

Fig. 5 is a schematic diagram describing the capability adjustment in the production system 1 according to the present embodiment. As shown in Fig. 5, the workpiece density (described in detail later) is measured in the transportation process 20. The determination is performed as to whether the measured workpiece density is appropriate for the transportation capability of the transportation process 20. When the workpiece density is determined inappropriate for the transportation capability of the transportation process 20, an instruction is provided to adjust at least one of the manufacturing capability of the manufacturing apparatus 12 and the packaging capability of the packaging apparatus 32.

In this manner, the workpiece density corresponding to the processing load in the transportation process 20 to be the bottleneck is measured. The processing capability of the preceding process or the following process is then adjusted in accordance with the measured workpiece density. This optimizes the processing capability of the entire production system 1.

D. Relationship between Transportation Capability and Processing Capability of Preceding and Following Processes

The relationship between the transportation capability and the processing capability of each of the preceding and following processes in the production system 1 according to the present embodiment will now be described.

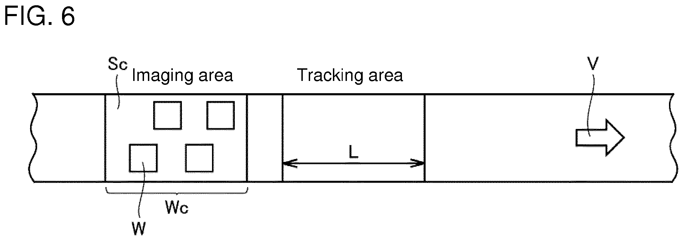

Fig. 6 is a diagram describing the limits on the transportation capability and the processing capability in the production system 1 according to the present embodiment. As shown in Fig. 6, the workpiece density is the number of workpieces W to be tracked per area in the transportation process 20. The workpiece density is the number of workpieces W per unit area on the conveyor.

The production system 1 according to the present embodiment typically measures the workpiece density using the image data obtained through an image capturing operation performed by the camera 23a included in the image sensor 23. More specifically, the workpiece density may be measured by dividing the number of workpieces W included in the image data obtained through the image capturing operation performed at any timing by an area size Sc of the imaging area defined in accordance with the imaging field of view of the camera 23a. More specifically, the workpiece density Wc (workpieces/m$^2$) measured in the imaging area that is associated with the camera 23a in the image sensor 23 is calculated using the formula described below based on the relationship between the number of workpieces Nc included in the image data obtained by the camera 23a in the image sensor 23 and the area size Sc of the imaging area.

Workpiece density Wc = the number of workpieces Nc / the area size Sc of the imaging area

The number of workpieces transported per unit time, which corresponds to the transportation capability (the number of workpieces that can be transported per unit time) of the transportation process 20 (robots 24-1 and 24-2), is defined as Wm (workpieces/hour).

The number of workpieces Wt (workpieces/hour) entering the tracking area per unit time may be calculated using the formula below, where L (m) is the width that can be tracked in the conveyor tracking system (tracking area width), and V (m/hour) is the transportation speed of the conveyor.

$$Wt = Wc \times L \times V$$

(workpieces/hour) To process all the workpieces that enter this tracking area in the transportation process 20, the condition below is to be satisfied.

$$Wm \leq Wt = Wc \times L \times V$$

(workpieces/hour) In other words, when workpieces transported by the transportation process 20 are packaged by a packaging apparatus, the above condition is to be satisfied. The number of workpieces that enter the tracking area per unit time Wt corresponds to the number of workpieces W per unit time provided to the packaging apparatus 32.

The workpiece density on the conveyor may be measured by the image sensor 23, or may be measured by the controller 100 based on the result of image processing performed by the image sensor 23. When the image sensor 23 measures the workpiece density, the measurement may be the processing performed in cooperation with the processing for recognizing workpieces. When the controller 100 measures the workpiece density, the image sensor 23 outputs the number of workpieces included in the image data obtained by the image sensor 23 as an image processing result. The controller 100 measures the workpiece density as appropriate using the size of the predetermined imaging range of the camera 23a.

In the production system 1 according to the present embodiment, the workpiece density is measured at a predetermined timing through the processing described above, and the processing capabilities of the preceding process and the following process of the conveyor are adjusted in accordance with the measured workpiece density.

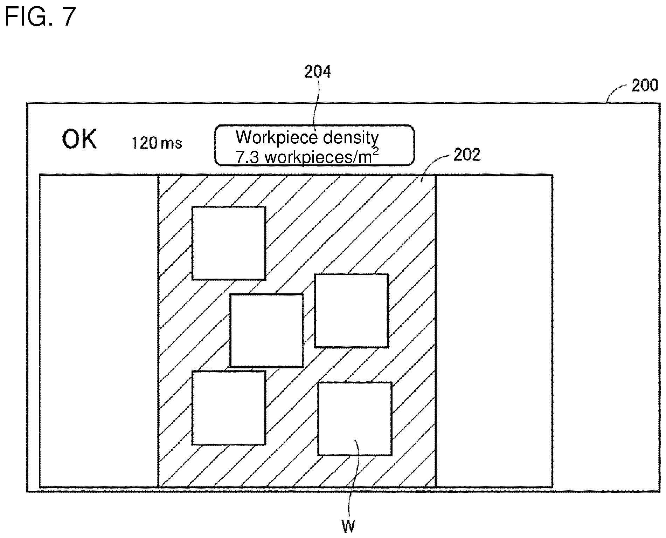

Fig. 7 is a diagram showing an example user interface screen showing the processing for measuring the workpiece density in the production system 1 according to the present embodiment. The controller 100 may provide a user interface screen 200 shown in Fig. 7. The user interface screen 200 displays a camera image 202 captured by the camera 23a of the image sensor 23 and a workpiece density 204 measured using the number of workpieces W obtained by the image processing for the camera image 202. In one example, the screen displays five workpieces W on the conveyor included in the imaging area. In this example, the workpiece density is measured to be 7.3 workpieces/m$^2$.

The user may obtain, for example, the operating state of the production system 1 by referring to the user interface screen 200. The user interface screen 200 may not be provided, but the controller 100 may internally perform the processing.

As described above, the production system 1 according to the present embodiment may include the image sensor 23 for performing the image processing for image data obtained by the connected camera 23a. The image sensor 23 may have the function for measuring the workpiece density based on the number of workpieces W included in the obtained image data, as well as the function for providing the user interface screen 200 including the obtained image data and the measured workpiece density.

E. Adjusting Processing Capabilities of Preceding and Following Processes

A method for adjusting the processing capabilities of the preceding process and the following process based on the workpiece density measured with the procedure described above will now be described.

As described above, the number of workpieces W that enter the tracking area per unit time Wt is to be adjusted to fall below the transportation capability of the transportation process 20. When the number of workpieces W that enter the tracking area per unit time Wt approaches the transportation capability of the transportation process 20, the manufacturing apparatus 12, which is arranged in the process preceding the conveyor, is adjusted to manufacture fewer workpieces W. In other words, when workpieces W are manufactured beyond the transportation capabilities of the robots 24-1 and 24-2, the controller 100 provides a command for lowering the manufacturing capability of the manufacturing apparatus 12. The command for adjusting the manufacturing capability regulates workpieces W exceeding the transportation capability on the conveyor.

To lower the manufacturing capability of the manufacturing apparatus 12, methods in accordance with the equipment characteristics and other parameters of the manufacturing apparatus 12 may be used. For example, when the manufacturing apparatus 12 heats the starting material and then processes the material into a product, the manufacturing apparatus 12 may lower the temperature at which the starting material is heated. In other words, the total heat amount is to be retained, and lowering the heating temperature of the starting material can reduce the number of workpieces to be manufactured per unit time.

In contrast, when the transportation capabilities of the robots 24-1 and 24-2 to be used per unit time have enough excess relative to the manufacturing capability of the manufacturing apparatus 12, the controller 100 provides a command for increasing the manufacturing capability of the manufacturing apparatus 12. In this case, the manufacturing apparatus 12 may heat the starting material at a higher temperature. A larger amount of starting material may also be fed to the manufacturing apparatus 12 per unit time to retain the total amount of heat applied to each workpiece and increase the production output per unit time.

In this manner, the manufacturing capability of the manufacturing apparatus 12 is controlled to allow the number of workpieces W that enter the tracking area per unit time to approach the transportation capability of the transportation process 20.

The packaging capability of the packaging apparatus 32 in the following process may be adjusted. In this case, increasing or decreasing the transportation speed of the conveyor 34 in the packaging apparatus 32 can increase or reduce the number of workpieces W to be packaged per unit time. Increasing or decreasing the transportation speed of the conveyor 34 in the packaging apparatus 32 also accelerates or decelerates the operation of the associated units (for example, a cutting unit) accordingly.

In this manner, the packaging capability of the packaging apparatus 32 is controlled to allow the number of workpieces W that enter the tracking area per unit time to approach the transportation capability of the transportation process 20.

F. Programs to be Executed

The programs to be executed to implement the processing performed by the controller 100 according to the present embodiment will now be described.

As shown in Fig. 3, the user programs 130 executed in the controller 100 include the tracking program 132, the manufacturing control program 134, the packaging control program 136, and the system capability adjustment program 138. Depending on the characteristics of each program (described later), the tracking program 132 and the system capability adjustment program 138 may be executed in shorter cycles than the manufacturing control program 134 and the packaging control program 136.

The tracking program 132 includes processing for obtaining the counts from the counter 27-1 arranged in the conveyor 21 and from the counter 27-2 arranged in the conveyor 22 and for transmitting the obtained counts to the robot controllers 25-1 and 25-2.

The tracking program 132 also includes processing for determining whether the image capturing condition is satisfied based on the count for the conveyor 21, and transmitting a trigger signal for capturing an image to the image sensor 23 when the image capturing condition is satisfied. The image capturing condition includes a predetermined increment (typically determined in accordance with the imaging field of view of the camera 23a) in the count of the conveyor 21 from the previous image capturing operation. In other words, every time the conveyor 21 travels a predetermined distance, an image of the workpieces W traveling on the conveyor 21 is captured repeatedly. Based on the image captured by the camera 23a, the image sensor 23 performs, for example, pattern matching, and returns a measurement result including the position of the workpiece W included in the imaging field of view to the controller 100.

In this manner, the image sensor 23 is arranged above the conveyor 14 connected to the manufacturing apparatus 12, and recognizes workpieces W traveling on the conveyor 14.

The tracking program 132 also includes processing for determining whether a new workpiece W has been placed on the conveyor 21 based on the measurement result from the image sensor 23 and for updating the position of the workpieces W on each of the conveyors 21 and 22 based on an increment in the count for each conveyor. The tracking program 132 further includes processing for transmitting an instruction for picking a target workpiece W based on the tracking result of each workpiece W to the robot controllers 25-1 and 25-2. In response to the instruction for picking the workpiece W, the robot controllers 25-1 and 25-2 track each workpiece W being transported on the conveyor 21 (perform a tracking operation), pick the target workpiece W, and place the picked workpiece W onto the conveyor 22.

The transportation speeds of the conveyors 21 and 22 are determined based on the transportation capabilities of the robots.

The system capability adjustment program 138 measures the workpiece density based on image data or a measurement result transmitted from the image sensor 23 in every predetermined cycle or for every event, and outputs a command for adjusting the capability of at least one of the preceding process and the following process in accordance with the measured workpiece density.

More specifically, the system capability adjustment program 138 generates a task including processing for determining whether the transportation capability to be used for workpieces W on the conveyor approaches a maximum transportation capability of the robots 24 based on the workpiece density Wc measured by the image sensor 23 and the transportation speed V of the conveyor associated with the image sensor 23, and processing for lowering the manufacturing capability of the manufacturing apparatus 12 when the transportation capability to be used for the workpieces W on the conveyor approaches the maximum transportation capability of the robots 24.

The task generated by the system capability adjustment program 138 may further include processing for lowering the processing capability of the packaging apparatus 32 when the transportation capability to be used for the workpieces W on the conveyor approaches the maximum transportation capability of the robots 24.

The manufacturing control program 134 and the packaging control program 136 include instructions for controlling the transportation speeds of the conveyor 14 of the manufacturing apparatus 12 and the conveyor 34 of the packaging apparatus 32. More specifically, the manufacturing control program 134 includes an instruction for synchronizing the transportation speed of the conveyor 14 with the transportation speed of the conveyor 21. The packaging control program 136 includes an instruction for synchronizing the transportation speed of the conveyor 34 with the transportation speed of the conveyor 22. The manufacturing control program 134 and the packaging control program 136 adjust the capabilities of the manufacturing apparatus 12 and the packaging apparatus 32 in response to a command from the system capability adjustment program 138.

The manufacturing control program 134 includes an instruction for synchronizing the operation of each unit of the manufacturing apparatus 12 (for example, heater temperature, air blow temperature, air blow volume, and press counts) with the transportation speed of the conveyor 14.

The packaging control program 136 includes an instruction for synchronizing the cam operation and the gear operation of the packaging apparatus 32 with the transportation speed and the position of the conveyor 34. The packaging control program 136 controls both the transportation speed of the conveyor 34 in the packaging apparatus 32 and the start timing of the cutting mechanism included in the packaging apparatus 32. These operations are associated with each other. Thus, either of these operations may be set as a master, and the other may be set as a slave in the control. More specifically, the synchronous control is performed with the transportation speed of the conveyor 34 as a master axis and the cutting mechanism as a slave axis. This master-slave control can maintain synchronization between the conveyor 34 and the cutting mechanism when the transportation speed of the conveyor 34 changes.

When the transportation speed of the conveyor 34 and the rotating speed of the cutting mechanism are synchronized immediately after packaging is started in the packaging apparatus 32, the two operations may not be started at the same time. The cutting mechanism may start rotating after the conveyor 34 starts transporting workpieces W, and then the cutting mechanism may accelerate for synchronization with the transportation speed of the conveyor 34. Separately controlling the speeds of the conveyor 34 and the cutting function in this manner can reduce mechanical impacts.

In this manner, the transportation speed of each conveyor may be varied in accordance with the number of workpieces W on each conveyor of the production system 1. When the transportation speed of any conveyor is changed, the packaging control program 136 may change the processing capabilities of the associated conveyor and either the manufacturing apparatus 12 or the packaging apparatus 32.

Although the tracking program 132 and the system capability adjustment program 138 are different programs, the two programs may be combined into a single program and implemented.

G. Priority of Programs

The production system 1 according to the present embodiment may assign more processing resources of the controller 100 to the transportation process 20, which can be the bottleneck, to improve the capability of the transportation process 20.

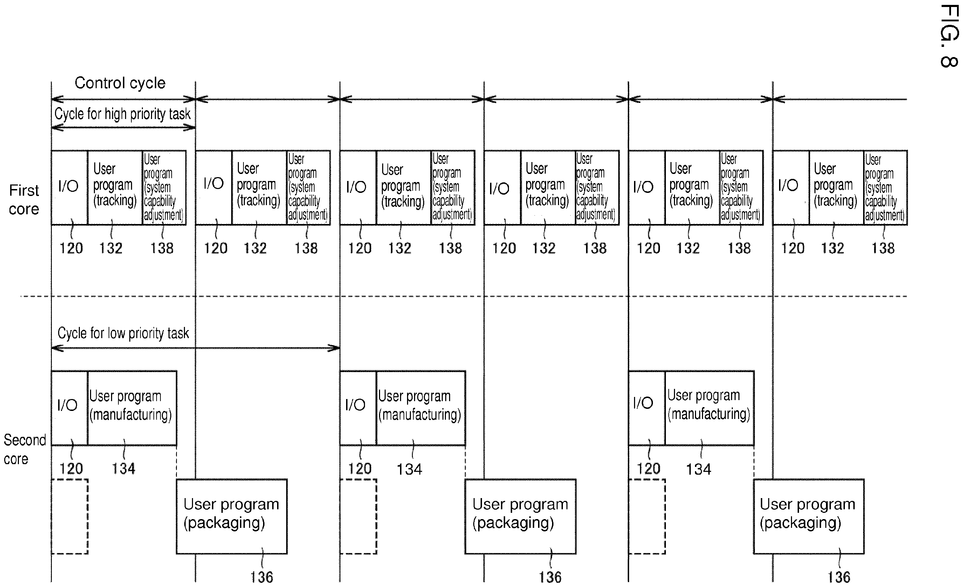

Fig. 8 is a schematic diagram describing program execution in the controller 100 of the production system 1 according to the present embodiment. In the processing example of Fig. 8, the controller 100 includes the processor 102 including two cores (a first core and a second core).

The controller 100 has an environment prepared for periodically executing programs, in which events for executing programs occur in predetermined control cycles. Each program is managed using a task, which is performed in every execution cycle of the program. A task with a short program execution cycle that is executed with a higher priority than other programs is referred to as a high-priority task. A task with a long program execution cycle (task execution cycle) that is executed with a lower priority than other programs is referred to as a low-priority task.

The tracking program 132 identifies the position of each workpiece W on the conveyor based on the recognition result from the image sensor 23, and generates tasks for picking target workpieces W for the robot. The manufacturing control program 134 generates tasks for performing the processing in the manufacturing apparatus 12. The packaging control program 136 generates tasks for performing the processing in the packaging apparatus 32, which is one example of the post-processing apparatus. The system capability adjustment program 138 generates tasks for adjusting the processing capability of at least one of the manufacturing apparatus 12 and the packaging apparatus 32 based on the workpiece density measured by the image sensor 23. More specifically, the system capability adjustment program 138 adjusts the manufacturing capability of the manufacturing apparatus 12 or the packaging capability of the packaging apparatus 32 based on the workpiece density.

Among these programs, the tracking program 132 and the system capability adjustment program 138 are defined as high-priority tasks, whereas the manufacturing control program 134 and the packaging control program 136 are defined as low-priority tasks. In other words, the high-priority tasks associated with the tracking program 132 and the system capability adjustment program 138 are executed repeatedly in shorter execution cycles than the low-priority tasks associated with the manufacturing control program 134 and the packaging control program 136.

In the controller 100, the program execution cycle may be predetermined as an integer multiple of the control cycle. In the example shown in Fig. 8, the execution cycle for the tracking program 132 and the system capability adjustment program 138, which are the high-priority tasks, is equal to the control cycle, whereas the execution cycle for the manufacturing control program 134 and the packaging control program 136, which are the low-priority tasks, is twice the control cycle. These programs are assigned to each core in accordance with their priorities, and are executed by the assigned core.

In the example shown in Fig. 8, the tracking program 132 and the system capability adjustment program 138 are assigned to the first core, and the manufacturing control program 134 and the packaging control program 136 are assigned to the second core. In other words, the high-priority tasks associated with the tracking program 132 and the system capability adjustment program 138 are executed by one of the plurality of cores, and the low-priority tasks associated with the manufacturing control program 134 and the packaging control program 136 are executed by another one of the cores different from the core for executing the high-priority tasks. Each core executes the corresponding program in the defined execution cycle.

Further, the high-priority task associated with the tracking program 132 and the high-priority task associated with the system capability adjustment program 138 may be executed by different cores. The low-priority task associated with the manufacturing control program 134 and the low-priority task associated with the packaging control program 136 may also be executed by different cores. In the example shown in Fig. 8, the two low-priority tasks are sequentially executed by the second core in the same execution cycle. This structure increases the use frequency of the second core.

In Fig. 8, I/O refers to the I/O processing for importing signals from the field through the functional units (input processing) and outputting commands through the functional units to the field (output processing). The I/O processing is executed as a part of the responsibility of the system programs 120. The I/O processing is basically executed in execution cycles for each program included in the user program to avoid discrepancy between the input data and the output data caused when the I/O processing is executed during execution of a user program.

In the example shown in Fig. 8, the tracking program 132 and the system capability adjustment program 138 are executed repeatedly in synchronization in the cycle same as the control cycle, and the I/O processing is thus executed repeatedly in the cycle same as the control cycle. In contrast, the manufacturing control program 134 and the packaging control program 136 are executed in the cycle that is twice the control cycle, and the I/O processing is thus executed repeatedly in that cycle. The I/O processing for the packaging control program 136 is also executed before the manufacturing control program 134 is executed.

Although the first core and the second core execute the corresponding programs separately in the example shown in Fig. 8, a single processor may execute the four programs. In this case, the tracking program 132 and the system capability adjustment program 138, which are the high-priority tasks, are executed in the predetermined execution cycle, whereas the manufacturing control program 134 and the packaging control program 136 are executed in parts during periods in which neither of the tracking program 132 nor the system capability adjustment program 138 is being executed. This control also has no problem unless the time taken for executing each part of the manufacturing control program 134 or each part the packaging control program 136 exceeds the predetermined program execution cycle.

As shown in Fig. 8, the execution cycle for the processing associated with the transportation process 20, which can be the bottleneck, may be shortened to increase the processing capability. This can improve the production efficiency of the entire production system 1.

H. Procedure

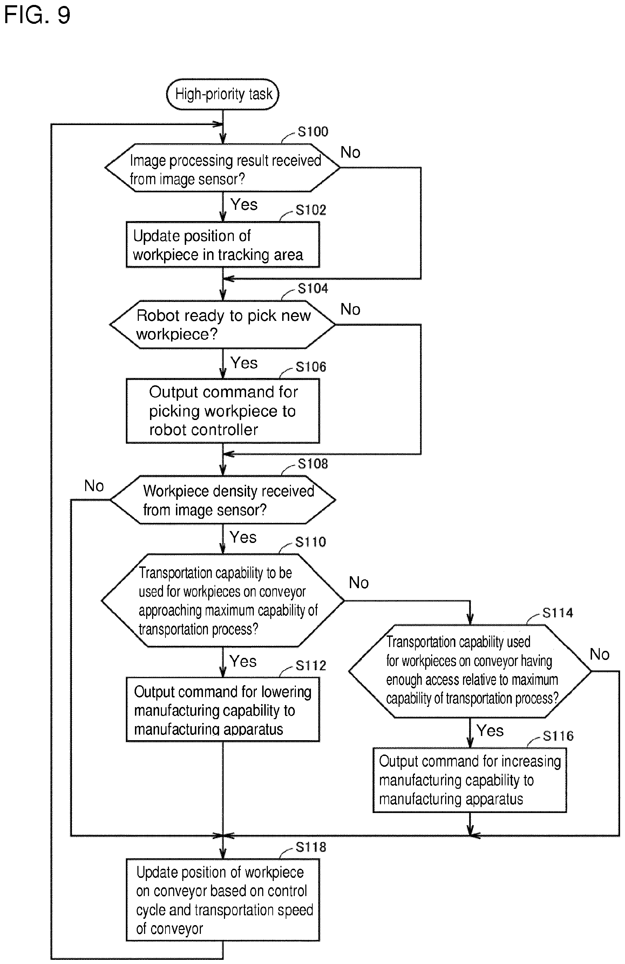

The processing performed in the controller 100 according to the present embodiment will now be described. Fig. 9 is a flowchart showing one example procedure performed in the controller 100 according to the present embodiment. Each step shown in Fig. 9 is performed typically by the processor 102 executing the tracking program 132 and the system capability adjustment program 138. In other words, the procedure shown in Fig. 9 is mainly performed using a high-priority task.

As shown in Fig. 9, the processor 102 determines whether the processor 102 has received the image processing result from the image sensor 23 (step S100). When the processor 102 has received the image processing result from the image sensor 23 (Yes in step S100), the processor 102 updates the positions of the workpieces in the tacking area (step S102). When the processor 102 has received no image processing result from the image sensor 23 (No in step S100), the processing in step S102 is skipped.

The processor 102 then determines whether the robots 24 are ready to pick a new workpiece (step S104). When the robots 24 are ready to pick a new workpiece (Yes in step S104), the processor 102 outputs a command for picking a workpiece to the robot controllers 25 based on the position of each workpiece on the tracking area (step S106). When the robots 24 are not ready to pick a workpiece (No in step S104), the processing in step S106 is skipped.

The processor 102 then determines whether the processor 102 has received the workpiece density from the image sensor 23 (step S108). When the processor 102 has received the workpiece density from the image sensor 23 (Yes in step S108), the processor 102 determines whether the transportation capability to be used for the workpieces on the conveyor approaches the maximum transportation capability of the transportation process 20 based on the received workpiece density (step S110).

When the transportation capability to be used for the workpieces on the conveyor approaches the maximum transportation capability of the transportation process 20 (Yes in step S110), the processor 102 outputs a command for lowering the workpiece manufacturing capability to the manufacturing apparatus 12 in the preceding process (step S112). The processor 102 may also output a command for lowering the workpiece packaging capability to the packaging apparatus 32 in the following process.

When the transportation capability to be used for the workpieces on the conveyor does not approach the maximum transportation capability of the transportation process 20 (No in step S110), the processor 102 determines whether the transportation capability to be used for the workpieces on the conveyor has enough excess relative to the maximum transportation capability of the transportation process 20 (step S114).

When the transportation capability to be used for the workpieces on the conveyor has enough excess relative to the maximum transportation capability of the transportation process 20 (Yes in step S114), the processor 102 outputs a command for increasing the workpiece manufacturing capability to the manufacturing apparatus 12 in the preceding process (step S116). The processor 102 may also output a command for increasing the workpiece packaging capability to the packaging apparatus 32 in the following process.

When the transportation capability to be used for the workpieces on the conveyor has enough excess relative to the maximum transportation capability of the transportation process 20 (No in step S114), the processing in step S116 is skipped.

When the processor 102 has not received the workpiece density from the image sensor 23 (No in step S108), the processing in steps S110 to S116 is skipped.

The processor 102 eventually updates the position of each workpiece on the conveyor based on the control cycle and the transportation speed of the conveyor (step S118). The processing is repeated.

As shown in the procedure described above, the control method for the production system 1 includes measuring the workpiece density on the conveyor and determining whether the transportation capability to be used for the workpieces on the conveyor approaches the maximum transportation capability of the tracking system based on the workpiece density and the transportation speed of the conveyor. The control method may additionally include lowering the transportation speed of the conveyor connected to the manufacturing apparatus 12 and lowering the temperature at which the starting material is heated by the manufacturing apparatus 12 when the transportation capability to be used for the workpieces W on the conveyor approaches the maximum transportation capability of the tracking system.

I. Delay Compensation for Packaging Apparatus

The production system 1 according to the present embodiment performs the processing associated with the transportation process 20 as a high-priority task, and the processing associated with the manufacturing apparatus 12 and the packaging apparatus 32 as low-priority tasks. This lengthens the relative cycles for obtaining the status values from the manufacturing apparatus 12 and the packaging apparatus 32 and for outputting commands to the manufacturing apparatus 12 and the packaging apparatus 32. However, particular operations such as cutting performed by the packaging apparatus 32 are to be performed at highly accurate timing.

The production system 1 according to the present embodiment may have the function for compensating a delay between the controller 100 and the packaging apparatus 32. Examples of this compensation function will now de described.

(1) Command Delay Compensation

The controller 100 and the packaging apparatus 32 are connected to each other with the field network NW. The processing in the controller 100 for obtaining field information from the packaging apparatus 32, generating a command, and transmitting the generated command to the packaging apparatus 32 can have delay times resulting from, for example, the task execution cycle in the controller 100 and the propagation time in the field network NW. Such delay times may be preliminarily measured or estimated based on the setting values and other parameters. A command may then be transmitted earlier by the time corresponding to such delay times to compensate for potential delays in starting any operation in the packaging apparatus 32.

(2) Cam Table

The numerical operations including floating decimal points may typically use more processing resources of the controller 100. Such numerical operations may thus be minimized. The cutting mechanism in the packaging apparatus 32 can typically be a rotating mechanism including a pair of rotary blades. Controlling the rotating mechanism involves specifying the rotation angles at every point of time, which involves numerical operations including trigonometric functions. To avoid such numerical operations, a table (cam table) predefining the characteristics of the rotating mechanism over time (showing the correspondence between each point of time and the rotating angle) may be prepared and referred to in generating commands as appropriate. This cam table can be used to perform highly accurate positioning control without executing numerical operations including trigonometric functions in every cycle.

J. Implementations

As described above, the controller 100 according to the present embodiment executes a plurality of tasks to control the three processes of the manufacturing process 10 (the manufacturing apparatus 12 and the conveyor 14), the transportation process 20 (the conveyor tracking system including the conveyors 21 and 22 and the robots 24-1 and 24-2), and the post-process 30 (the packaging apparatus 32 and the conveyor 34).

The manufacturing process 10 and the post-process 30 are mostly controlled using sequence instructions. For the transportation process 20, the position of each workpiece is updated in accordance with the transportation speed of each conveyor, and the position commands for the robots 24-1 and 24-2 are provided to the robot controllers 25-1 and 25-2. The processing for calculating and outputting the position commands for the robots 24-1 and 24-2 is complicated. To support creation of the user programs 130, function blocks for simplifying the calculation of the position commands output to the robot controllers 25-1 and 25-2 and other operations may be predefined.

When the user defines such function blocks as a part of a user program, the processor 102 calls, for example, the motion library 124 (refer to Fig. 3) and performs the processing associated with the specified function block when the corresponding user program is executed. Such function blocks can improve the efficiency in creating user programs as well as the reusability of the user programs.

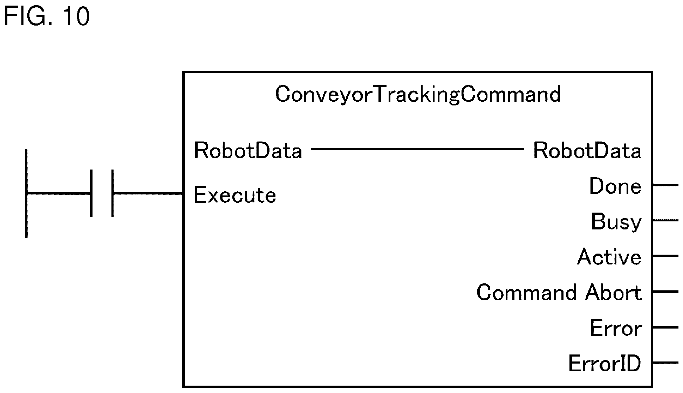

Fig. 10 is a diagram showing an example function for controlling a robot that can be used by a user program executed in the controller 100 according to the present embodiment. As shown in Fig. 10, the function shown in Fig. 10 is associated with a structure variable RobotData having its member variables storing information about the robot control.

Setting the input variable Execute to TRUE can start the conveyor tracking processing using the structure variable RobotData. In response to an input command, the variable Busy turns to TRUE. In response to an output command value, the variable Active turns to TRUE. When a command is interrupted, the variable Command-Abort turns to TRUE. In response to an error, the variable Error turns to TRUE, and the variable ErrorID is set to an error ID representing the error.

The program developer may use these function blocks to reduce the number of codes for performing complicated conveyor tracking. These function blocks are used in the tracking program 132 for controlling the conveyor tracking system described above. In other words, at least a part of the tracking program 132 may be described using the function blocks associated with the robot control shown in Fig. 10.

K. Advantages

In the present embodiment, the density of workpieces to be handled by the conveyor tracking system on the conveyor is measured, and commands are provided to apparatuses arranged in the preceding process and the following process of the conveyor tracking system based on the measured workpiece density. This structure is intended to improve the productivity of the entire production line, in addition to the conveyor tracking system including the conveyors and the robots.

In the present embodiment, tasks for controlling the conveyor tracking system are executed repeatedly in shorter cycles than other tasks. This improves the response speeds of the robots and the conveyors included in the conveyor tracking system. This structure provides commands to the conveyors and the robots in cycles appropriate for the requested control performance, and allows accurate synchronization of the robots included in the conveyor tracking system with the manufacturing apparatus 12 in the preceding process and the packaging apparatus 32 in the following process.

The above structure improves the performance of the conveyor tracking system, which can be the bottleneck in the production system 1, and optimizes the production efficiency of the production system 1.

The single controller 100 controls a plurality of processes in the production system 1 according to the present embodiment, and thus reduces the cost of the entire production system 1. Additionally, the single controller 100 can centrally hold information across the different processes, and thus can minimize any influence from delays between the processes including communication delays.

The embodiments disclosed herein are only illustrative in all respects and should not be construed to be restrictive. The scope of the present invention is determined not by the description given above but by the claims, and is construed as including any modification that comes within the meaning and range of equivalency of the claims.

REFERENCE SIGNS LIST

1 production system
10 manufacturing process
12 manufacturing apparatus
14, 21, 22, 34 conveyor
18, 28-1, 28-2, 38 motor
19, 29-1, 29-2, 39 motor driver
20 transportation process
23 image sensor
23a camera
24-1, 24-2 robot
25-1, 25-2 robot controller
26-1, 26-2 encoder
27-1, 27-2 counter
30 post-process
32 packaging apparatus
100 controller
102 processor
102a first core
102b second core
104 main memory
106 secondary memory device
108 bus
110 bus master circuit
112 local interface circuit
114 network master circuit
120 system program
122 sequence library
124 motion library
126 scheduler
130 user program
132 tracking program
134 manufacturing control program
136 packaging control program
138 system capability adjustment program
200 user interface screen
202 camera image
204 workpiece density
NW field network
W workpiece

**Claims**

1. A production system, comprising:

   a manufacturing apparatus configured to manufacture workpieces;
   a post-processing apparatus configured to perform post-processing for the workpieces;
   a plurality of conveyors configured to transport the workpieces manufactured by the manufacturing apparatus to the post-processing apparatus;

an image sensor arranged above one of the plurality of conveyors connected to the manufacturing apparatus, and configured to recognize workpieces traveling on the conveyor and measure a density of the workpieces on the conveyor;

a robot configured to pick each workpiece on the conveyor connected to the manufacturing apparatus; and

a controller configured to perform

a first task for identifying a position of each workpiece on the conveyor based on a recognition result obtained by the image sensor and causing the robot to pick a target workpiece,

a second task for performing processing in the manufacturing apparatus, a third task for performing processing in the post-processing apparatus, and

a fourth task for adjusting a processing capability of at least one of the manufacturing apparatus and the post-processing apparatus based on the density of the workpieces measured by the image sensor.

2. The production system according to claim 1, wherein the fourth task includes

determining whether the transportation capability to be used for the workpieces on the conveyor approaches a maximum transportation capability of the robot based on the density of the workpieces measured by the image sensor and a transportation speed of the conveyor that is associated with the image sensor, and

lowering a manufacturing capability of the manufacturing apparatus when the transportation capability to be used for the workpieces on the conveyor approaches the maximum transportation capability of the robot.

3. The production system according to claim 2, wherein the fourth task includes lowering the processing capability of the post-processing apparatus when the transportation capability to be used for the workpieces on the conveyor approaches the maximum transportation capability of the robot.

4. The production system according to any one of claims 1 to 3, wherein

the first task and the fourth task are executed repeatedly in shorter execution cycles than the second task and the third task.

5. The production system according to any one of claims 1 to 4, wherein

the controller includes a processor including a plurality of cores,

the first task and the fourth task are executed by one of the plurality of cores, and

the second task and the third task are executed by another one of the plurality of cores different from the core for executing the first task.

6. The production system according to claim 5, wherein the first task and the fourth task are executed by a first core included in the plurality of cores, and the second task and the third task are sequentially executed by a second core included in the plurality of cores in the same execution cycle.

7. A controller, comprising:

a communication interface configured to allow data communication among a manufacturing apparatus for manufacturing workpieces, a post-processing apparatus for performing post-processing for the workpieces, an image sensor arranged above a conveyor connected to the manufacturing apparatus to recognize workpieces traveling on the conveyor and measure a density of the workpieces on the conveyor, and a robot for picking each workpiece on the conveyor connected to the manufacturing apparatus; and

a processor configured to perform

a first task for identifying a position of each workpiece on the conveyor based on a recognition result obtained by the image sensor and causing the robot to pick a target workpiece,

a second task for performing processing in the manufacturing apparatus,

a third task for performing processing in the post-processing apparatus, and

a fourth task for adjusting a processing capability of at least one of the manufacturing apparatus and the post-processing apparatus based on the density of the workpieces measured by the image sensor.

8. A control method for a production system including a manufacturing apparatus for manufacturing workpieces, a post-processing apparatus for performing post-processing for the workpieces, a plurality of conveyors for transporting the workpieces manufactured by the manufacturing apparatus to the post-processing apparatus, and a tracking system for recognizing workpieces traveling on one of the conveyors connected to the manufacturing apparatus, and picking each workpiece on the conveyor and placing the picked workpiece at a predetermined position based on a recognition result for the workpieces, the control method comprising:

measuring a density of the workpieces on the conveyor,

determining whether the transportation capability to be used for the workpieces on the conveyor approaches a maximum transportation capability of the tracking system based on the density of the workpieces and a transportation speed of the conveyer, and

lowering a transportation speed of the tracking system and lowering a temperature at which the manufacturing apparatus heats a starting material when the transportation capability to be used for the workpieces on the conveyor approaches the maximum transportation capability of the tracking system.

FIG. 1

FIG. 2

# FIG. 3

Diagram showing system 100:

Processor (102) containing First core (102a) and Second core (102b).

Flash memory (106):
- User program (130):
  - Tracking program (132)
  - Manufacturing control program (134)
  - Packaging control program (136)
  - System capability adjustment program (138)
- System program (120):
  - Sequence library (122)
  - Motion library (124)
  - Scheduler (126)

Main memory (104)

Bus (108) connecting to:
- Bus master circuit (110) → Functional unit
- Local interface circuit (112) → Support apparatus
- Network master circuit (114) → Field network NW

## FIG. 4

Packaging apparatus 32

Packaging capability: $N_{min}$ to $N_{max}$ (workpieces/hour)

Workpiece

Conveyor tracking system

Conveyor

24

Transportation capability

Conveyor

Workpiece

Manufacturing apparatus 12

Manufacturing capability: $M_{min}$ to $M_{max}$ (workpieces/hour)

# FIG. 5

Packaging apparatus 32

Conveyor tracking system

Workpiece

Conveyor

24

Transportation capability

(1) Measure workpiece density
(2) Determine appropriateness of transportation capability

Packaging capability: $N_{min}$ to $N_{max}$ (workpieces/hour)

(4) Adjust packaging capability

(3) Adjust manufacturing capability

Conveyor

Workpiece

Manufacturing apparatus 12

Manufacturing capability: $M_{min}$ to $M_{max}$ (workpieces/hour)

FIG. 6

Sc Imaging area          Tracking area                              V

L

Wc

W

FIG. 7

FIG. 8

EP 3 336 632 A1

Control cycle

Cycle for high priority task

| First core | I/O | User program (tracking) | User program (system capability adjustment) | I/O | User program (tracking) | User program (system capability adjustment) | I/O | User program (tracking) | User program (system capability adjustment) | I/O | User program (tracking) | User program (system capability adjustment) | I/O | User program (tracking) | User program (system capability adjustment) | I/O | User program (tracking) | User program (system capability adjustment) |
|---|---|---|---|---|---|---|---|---|---|---|---|---|---|---|---|---|---|---|
| | 120 | 132 | 138 | 120 | 132 | 138 | 120 | 132 | 138 | 120 | 132 | 138 | 120 | 132 | 138 | 120 | 132 | 138 |

Cycle for low priority task

| Second core | I/O | User program (manufacturing) | I/O | User program (manufacturing) | I/O | User program (manufacturing) |
|---|---|---|---|---|---|---|
| | 120 | 134 | 120 | 134 | 120 | 134 |

User program (packaging)

User program (packaging)

User program (packaging)

136            136            136

## FIG. 9

```
                        ( High-priority task )
                                  │
                                  ▼                        S100
                        ╱ Image processing result received ╲    No
                        ╲ from image sensor?                ╱─────────┐
                                  │ Yes                               │
                                  ▼          S102                     │
                        ┌─────────────────────┐                       │
                        │ Update position of  │                       │
                        │ workpiece in tracking area │                │
                        └─────────────────────┘                       │
                                  │ ◄───────────────────────────────┘
                                  ▼                        S104
                        ╱ Robot ready to pick new ╲    No
                        ╲ workpiece?              ╱─────────────┐
                                  │ Yes                         │
                                  ▼          S106               │
                        ┌─────────────────────┐                 │
                        │ Output command for  │                 │
                        │ picking workpiece to│                 │
                        │ robot controller    │                 │
                        └─────────────────────┘                 │
                                  │ ◄────────────────────────┘
                                  ▼                        S108
             No         ╱ Workpiece density received ╲
          ┌─────────────╲ from image sensor?         ╱
          │                       │ Yes
          │                       ▼          S110
          │            ╱ Transportation capability to be ╲    No
          │            ╲ used for workpieces on conveyor  ╱──────────┐
          │            ╲ approaching maximum capability of╱          │
          │            ╲ transportation process?          ╱          ▼                    S114
          │                       │ Yes                    ╱ Transportation capability used ╲    No
          │                       ▼          S112          ╲ for workpieces on conveyor having╱──────┐
          │            ┌─────────────────────┐             ╲ enough access relative to maximum╱      │
          │            │ Output command for  │             ╲ capability of transportation process?╱  │
          │            │ lowering            │                        │ Yes        S116             │
          │            │ manufacturing capability to │                ▼                            │
          │            │ manufacturing apparatus │      ┌─────────────────────────────┐            │
          │            └─────────────────────┘         │ Output command for increasing│            │
          │                       │                     │ manufacturing capability to  │            │
          │                       │                     │ manufacturing apparatus      │            │
          │                       │                     └─────────────────────────────┘            │
          │                       │ ◄───────────────────────────────────┴──────────────────────────┘
          │                       ▼          S118
          │            ┌─────────────────────┐
          │            │ Update position of workpiece │
          │            │ on conveyor based on control │
          │            │ cycle and transportation speed│
          │            │ of conveyor          │
          │            └─────────────────────┘
          │                       │
          └───────────────────────┘
```

FIG. 10

```
                    ConveyorTrackingCommand

       RobotData ─────────────────── RobotData
  ─┤ ├─  Execute                              Done ──
                                             Busy ──
                                           Active ──
                                   Command Abort ──
                                            Error ──
                                          ErrorID ──
```

Europäisches
Patentamt

European
Patent Office

Office européen
des brevets

# EUROPEAN SEARCH REPORT

Application Number

EP 17 19 7014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 233 400 A1 (OPM S P A [IT]) 29 September 2010 (2010-09-29) * abstract * * figure 1 * * paragraphs [0011] - [0035] * ----- | 1-8 | INV. G05B19/418 B23Q7/14 |
| A | US 2006/231295 A1 (YAMAGUCHI YASUSHI [JP] ET AL) 19 October 2006 (2006-10-19) * abstract * * figures 2,5 * * paragraphs [0057] - [0133] * ----- | 1-8 | |
| A | YVES DALLERY ET AL: "Manufacturing flow line systems: a review of models and analytical results", QUEUEING SYSTEMS., vol. 12, no. 1-2, 1 March 1992 (1992-03-01), pages 3-94, XP055471449, CH ISSN: 0257-0130, DOI: 10.1007/BF01158636 * sections 2.3, 3.8, 4.3 * ----- | 1-8 | |
| A | US 2014/316565 A1 (AOYAMA KAZUNARI [JP]) 23 October 2014 (2014-10-23) * abstract * * figure 1 * * paragraphs [0023] - [0034] * ----- | 1-8 | TECHNICAL FIELDS SEARCHED (IPC) G05B B23Q B25J B65B |
| A | US 2010/094453 A1 (NISHIHARA YASUNORI [JP] ET AL) 15 April 2010 (2010-04-15) * abstract * * figure 1 * * paragraphs [0028] - [0103] * ----- | 1-8 | |

The present search report has been drawn up for all claims

| Place of search | Date of completion of the search | Examiner |
|---|---|---|
| The Hague | 30 April 2018 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 7014

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2018

| Patent document cited in search report | | Publication date | Patent family member(s) | | Publication date |
|---|---|---|---|---|---|
| EP 2233400 | A1 | 29-09-2010 | EP 2233400 A1 | | 29-09-2010 |
| | | | IT 1394135 B1 | | 25-05-2012 |
| US 2006231295 | A1 | 19-10-2006 | GB 2425620 A | | 01-11-2006 |
| | | | JP 4804025 B2 | | 26-10-2011 |
| | | | JP 2006293922 A | | 26-10-2006 |
| | | | US 2006231295 A1 | | 19-10-2006 |
| US 2014316565 | A1 | 23-10-2014 | CN 104111628 A | | 22-10-2014 |
| | | | DE 102014005557 A1 | | 23-10-2014 |
| | | | JP 2014211721 A | | 13-11-2014 |
| | | | US 2014316565 A1 | | 23-10-2014 |
| US 2010094453 | A1 | 15-04-2010 | DE 102006031178 A1 | | 11-01-2007 |
| | | | GB 2428035 A | | 17-01-2007 |
| | | | JP 4864363 B2 | | 01-02-2012 |
| | | | JP 2007015055 A | | 25-01-2007 |
| | | | US 2007007924 A1 | | 11-01-2007 |
| | | | US 2010094453 A1 | | 15-04-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11090871 A

- JP 2010280010 A